# EUROPEAN PATENT APPLICATION

(11) **EP 4 265 151 A1**
(43) Date of publication of application: **25.10.2023**
(21) Application number: 22169312.0
(22) Date of filing: 21.04.2022
(51) Int. Cl.: A46B 15/00, A61C 17/22, A46B 13/02

(54) **PERSONAL CARE DEVICE**

(71) Applicant: Koninklijke Philips N.V., 5656 AG Eindhoven (NL)
(72) Inventor: RONDA, Cornelis Reinder, Eindhoven (NL); OUWELTJES, Okke, Eindhoven (NL); HORSTMAN, Pieter, Eindhoven (NL)
(74) Representative: Philips Intellectual Property & Standards

(57) **Abstract**

Proposed are schemes, solutions, concepts, designs, methods and systems pertaining to aiding and/or improving a vibratory personal care device having cleaning elements that are adapted, in use, to vibrate. It has been realized that, by analyzing a vibration of the cleaning elements as they engage with a surface of a user, a force exerted by cleaning elements on the surface may be determined. That is, the vibration of the cleaning elements are indicative of a force exerted by a user on a surface via the cleaning elements. In this way, there is no need for a dedicated pressure sensor for determining the force for feedback to the user.

## Description

### FIELD OF THE INVENTION

The present invention relates to the field of personal care devices, and in particular to the field of personal care devices that detect a force applied by cleaning elements on a surface of a user when in use.

### BACKGROUND OF THE INVENTION

Personal care devices, such as electric brushing or shaving devices, are used on a regular (e.g. daily) basis. Many personal care devices are equipped with inertial motion unit (IMU) sensors (i.e. an accelerometer and a gyroscope). The IMU sensor signal is used in determining the location and orientation of the personal care device during a brushing session.

Commonly, personal care devices have cleaning elements (e.g. bristles, tufts, elongated projections and the like) which are configured to vibrate in use. The magnitude of force/pressure applied by the cleaning elements to the surface of the user is strongly linked to the quality of cleaning of the surface. Furthermore, excessive pressure applied to a user's tissue surface during use may be linked tissue damage.

As such, many personal care devices are known to detect a pressure applied by a cleaning element, and to warn a user when too much pressure is being applied to a tissue surface during use. This is usually achieved by a pressure sensor provided in the cleaning head of the personal care device.

### SUMMARY OF THE INVENTION

The invention is defined by the claims.

According to examples in accordance with an aspect of the invention, there is provided a vibratory personal care device comprising:
a plurality of cleaning elements for engagement with a surface of a user;
vibratory means adapted to vibrate the cleaning elements;
a sensor unit configured to detect a vibration of the cleaning elements as the cleaning element engages with the surface of the user; and
a processor configured to analyse the detected vibration in order to determine a force exerted by the cleaning elements on the surface of the user.

Proposed are schemes, solutions, concepts, designs, methods and systems pertaining to aiding and/or improving a vibratory personal care device having cleaning elements that are adapted, in use, to vibrate.

In particular, by analyzing a vibration of the cleaning elements as they engage with a surface of a user, a force exerted by cleaning elements on the surface may be determined. That is, the vibration of the cleaning elements are indicative of a force exerted by a user on a surface via the cleaning elements. In this way, there is no need for a dedicated pressure sensor for determining the force for feedback to the user.

Embodiments are based on a realization that information pertaining to the vibration of the cleaning elements can be leveraged to determine a force exerted by cleaning elements on a surface of a user. Indeed, characteristics of vibration (i.e. a frequency, amplitude, etc.) vary with a force exerted by the cleaning elements on the surface of the user. Thus, by measuring/detecting the vibration, and analyzing the vibration, a force may be determined.

Personal care devices, such as vibratory toothbrush or mouthpiece are often configured to measure a magnitude of a force applied to its cleaning elements (e.g. bristles). This could arise from a user pressing the device against their teeth. Such a measurement may enable the provision of feedback to the user, such that favorable habits are reinforced, and unfavorable behavior highlighted.

Commonly, personal care devices are provided with an accelerometer and gyroscope, such as an inertial movement unit (IMU) sensor. Typically, these are used to determine a position and orientation of the personal care device. However, it has been realized that such sensors may also be used to detect a vibration. As a result, it is envisioned that such sensors can be used to detect a force/pressure exerted by the cleaning elements on the surface of the user, enabling the above advantages. Of course, this obviates the need for a dedicated pressure sensor, reducing costs and complexity of the personal care device.

Nevertheless, any sensor means that is capable of detecting a vibration of the cleaning elements may be used to determine a pressure/force exerted by the cleaning elements. Such a sensor may be integrated with the personal care device (i.e. in a handle), or could be provided externally (i.e. a microphone on a smart phone). Thus, the inventive concept enables the determination of applied force using a variety of means.

Put another way, characteristics of vibration of members used to clean a surface (i.e. a tissue) of a user corresponds to a force exerted by the members on the surface. By way of example, when a relatively large force is applied to the user's surface, the amplitude of vibration of the cleaning members may also be relatively large. Conversely, it follows that when a relatively small force is applied to the user's surface, the amplitude of vibration of the cleaning members may also be relatively small.

As a result, a force may be determined based on vibration of the cleaning elements. This enables several use cases, such as immediate feedback to adjust a user's cleaning behavior, long term analysis of cleaning habits, and determination and visualization of risks associated with user's cleaning behavior.

The sensor unit may further comprise an accelerometer configured to measure an amplitude and a frequency of vibration of the cleaning elements. In some embodiments, the accelerometer is an inertial motion unit sensor.

One suitable sensor unit for vibration is an accelerometer. Indeed, using such a sensor a frequency and amplitude of vibration of the cleaning elements may be determined. It is often the case that personal care devices contain accelerometers (or even an IMU sensor) in order to determine a position and orientation of the personal care device during use. This sensor may be given a second purpose, namely to detect a vibration of the cleaning elements.

In some embodiments, the sensor unit may be integrated with a handle of the device.

In an embodiment of the invention, the accelerometer may be configured to measure the amplitude and frequency of vibration at a rate greater than 1 kHz.

Sampling the amplitude and frequency of vibration at a rate greater than 1 kHz, a first harmonic of the vibration of the cleaning elements may be adequately sampled. As a result, a more accurate determination of the vibration of the cleaning elements may be obtained.

In alternative embodiments, the sensor unit may comprise an acoustic sensor configured to measure an amplitude and a frequency of vibration of the cleaning elements.

Indeed, an acoustic sensor may be used as an alternative to, or in addition to another means for sensing vibration of the cleaning elements (i.e. an accelerometer). Such a sensor may be provided with the personal care device (i.e. integrated in a handle), or separate to the personal care device (i.e. a microphone of a smartphone of the user).

The processor may be configured to determine the force exerted by the cleaning elements based on at least one of the measured amplitude and the measured frequency.

In particular, the measured amplitude and frequency may be analyzed in order to accurately determine the force exerted by the cleaning elements.

In some exemplary embodiments, the processor may be further configured to analyse the measured amplitude and the measured frequency in order to determine a frequency spectrum of the detected vibration; and determine the exerted force based on the frequency spectrum.

Indeed, the frequency spectrum of the vibration of the cleaning elements may provide information that can lead to a more accurate determination of the force exerted by the cleaning elements.

In further embodiments, the processor may be configured to obtain a driving vibration signal of the vibratory means; and analyse the detected vibration and the driving vibration signal in order to determine the exerted force.

The vibratory means of the personal care device drives a vibration of the cleaning elements. As a result, this vibration may affect the vibration induced by pressure applied to the surface of the user by the cleaning element. Thus, by taking the driving vibration signal into account, a more accurate force determination may be achieved.

The processor may be configured to process, with a force determination machine learning algorithm, the detected vibration in order to determine the exerted force. In this case, the force determination machine learning algorithm may be trained using a training algorithm configured to receive an array of training inputs and known outputs, wherein the training inputs comprise a plurality of vibrations of cleaning elements of the device as the cleaning element engages with a surface, and the known outputs comprise a plurality of forces exerted by the cleaning elements of the device on the surface.

A machine learning algorithm may be exploited in order to obtain a more accurate determination of applied force/pressure on the surface of the user.

The device according to some exemplary embodiments may further comprise a feedback component comprising sensory output means, and the processor may be further configured to control the feedback component to provide an indicator of the determined force.

In this way, the information gathered by determining the applied force may be exploited to provide the user with feedback that may aid in the improvement of their cleaning behavior/habits.

In some embodiments, the cleaning elements may comprise a plurality of bristles, and the sensor unit may be configured to detect a vibration of at least some of the plurality of bristles as the at least some of the plurality of bristles engage with the surface of the user.

The device may be a toothbrush. Indeed, it is envisioned that the invention may be particularly beneficial for use in a toothbrush. Pressure detection is particularly beneficial to inform the user about their brushing behavior, as teeth and gums are particularly sensitive to too much/too little force applied. Indeed, many toothbrushes already contain a sensor unit (typically an IMU sensor) that can be used to detect the vibration of the cleaning elements.

According to another aspect of the invention, there is provided a method for detecting a force exerted by a vibratory personal care device comprising a plurality of cleaning elements for engagement with a surface of a user and a vibratory means adapted to vibrate the cleaning elements, the method comprising:
detecting a vibration of the cleaning element of the device as the cleaning element engages with the surface of the user; and
analysing the detected vibration in order to determine a force exerted by the cleaning elements on the surface of the user.

According to yet another aspect of the invention, there is provided a computer program comprising computer program code means which is adapted, when said computer program is run on a computer, to implement a method according to proposed embodiment.

Thus, there may also be provided a computer system comprising: a computer program product according to proposed embodiment; and one or more processors adapted to perform a method according to a proposed concept by execution of the computer-readable program code of said computer program product.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a simplified schematic block diagram of an electric toothbrush according to a proposed embodiment;
Figure 2 depicts a modification to the embodiment of Figure 1;
Figure 3 depicts a different modification to the embodiment of Figure 1;
Figure 4 presents a graph representative of a relationship between accelerometer amplitude and force applied by cleaning elements of a personal care device;
Figure 5 presents a graph representative of a relationship between accelerometer amplitude and force applied by cleaning elements of a personal care device depending on a frequency of the vibration;
Figure 6 is a simplified flow diagram of a method for detecting a force exerted by a vibratory personal care device according to an embodiment; and
Figure 7 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for aiding and/or improving cleaning from a vibratory personal care device, while reducing complexity. In particular, embodiments may provide a system, device and/or method which provides a process for determination of a force applied to a surface of a user by cleaning elements of the personal care device using a sensor already commonly provided in vibratory personal care devices. The detection of force applied may enable a vibratory personal care device to provide a feedback as the force, which may, for example enhance cleaning outcomes and reinforce favorable cleaning habits.

The proposed concepts may, for example, be applied to electric toothbrushes and mouthpiece-style toothbrushes (as quality of teeth cleaning is particularly dependent on an applied force). Indeed, these devices commonly employ sensors suitable for detecting vibrations (in order to determine an orientation of the device), and so a number of sensors required by such devices may be reduced by the realization that applied force may be determined by a detected vibration. In other words, proposed concepts increase a simplicity of personal care devices (such as electric toothbrushes and mouthpiece-style toothbrushes) by reducing redundancy.

Embodiments may therefore facilitate a detection of force applied by cleaning elements in vibratory personal care devices in a novel manner. Indeed, embodiments of the invention mean that a dedicated pressure sensor is not required to determine an applied force.

By way of explanation, many vibratory personal care devices, such as electric toothbrushes, are equipped with inertial motion unit (IMU) sensors (i.e. accelerometer and gyroscope). The IMU sensor signal is typically used for determining the location and orientation of the toothbrush during a brushing session.

Embodiments of the invention use signals from a sensor suitable for detecting vibration of the cleaning elements (i.e. an IMU sensor, or an acoustic sensor) in order to determine the applied pressure or brushing force during brushing from changes in, for example the amplitude and frequency spectrum of the detected vibration. Such a sensor may be in a handle of the device to detect the motion/vibrations while the cleaning elements are engaged with a surface of the user (i.e. when brushing). A processor may then analyze/interpret them to generate an indicator of pressure applied. This indicator may be used to warn the user to apply pressure/force according to a recommended regime.

Put simply, it has been found that the higher an exerted force, the more vibrations were present in the brushing handle.

For example, many powered toothbrush handles contain a pressure sensor to detect pressure applied during brushing. According to aspects of the invention, an IMU sensor (that may be used for localization purposes) can also be used to detect the force applied on a surface of the user as a cleaning element (i.e. bristles) engages a surface (i.e. skin, teeth, hair, etc.) of the user. The detection may be based on changes in the frequency spectrum (amplitude differences, different frequency responses, differences in noise floor).

It should be noted that the vibration sensor may be a sensor other than an IMU/accelerometer. For example, the device may not have an IMU/accelerometer, but may instead have a (external) acoustic sensor, such as in a mobile device. Indeed, any sensor suitable for detecting the movement or vibration of cleaning elements may be utilized.

In further embodiments, a force determination machine learning algorithm may be used to determine or classify the different force levels from the detected vibration.

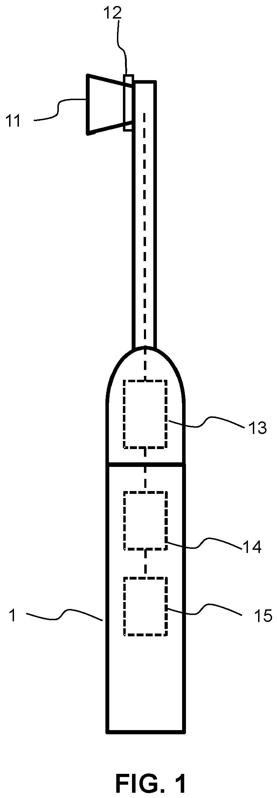

Referring to Figure 1, there is shown a simplified schematic block diagram of an electric toothbrush 1 according to a proposed embodiment. The electric toothbrush 1 comprises a brush head 12 supporting a plurality of bristles 11 (i.e. cleaning elements 11) for engagement with an oral surface of a user. The toothbrush also comprises vibratory means 13 (specifically, a motor) that is adapted, in use, to vibrate the brush head 12 (and thus the bristles 11) of the electric toothbrush 1. Other vibratory means 13 would be appreciated by the skilled person. The vibration may be provided across a range of different frequencies (e.g. 25 Hz-1 kHz).

The toothbrush 1 also comprises a sensor unit/means 14 configured to detect a vibration (i.e. an oscillation or movement) of the cleaning elements 11 as the cleaning element 11 engages with the surface of the user (such as during a cleaning/brushing session). In other word, the cleaning member 11 experiences a vibration due to the contact with the surface (i.e. tissue, hair, teeth, etc.) of the user. The sensor unit 14 detects/measures/senses the vibration of at least one of the cleaning members 11.

In some embodiments, the sensor unit 14 comprises an accelerometer configured to measure an amplitude and a frequency of vibration of the cleaning elements 11. The accelerometer may be integrated within a handle of the toothbrush/personal care device 1, or may be provided at any location in which readings of the accelerometer may change with a vibration of the cleaning elements 11 (i.e. in the brush head 12). Indeed, in some cases the accelerometer may be an inertial motion unit (IMU) sensor, being a sensor unit 14 comprising an accelerometer and a gyroscope.

When the device 1 is configured such that the amplitude and frequency of vibration are measured, then then sensor unit 14 may sample the frequency and amplitude at a rate greater than 1 kHz. Indeed, a brushing frequency is typically around 250 Hz (fb). As such, the first harmonic is 2^{∗}fb, the second harmonic is 3^{∗}fb, and so on. Thus, it may be beneficial for the sampling frequency to be high enough to sample the first harmonic correctly according to the Nyquist theorem (which states that the sampling frequency must be larger than twice the maximum frequency to be sampled). Generally, the higher the sampling frequency, the better the reading. However, a higher sampling frequency may result in a larger power drain and storage required.

Finally, the device 1 comprises a processing arrangement 15 (i.e. a control unit 15) configured to analyse the detected vibration in order to determine a force/pressure exerted by the cleaning elements 11 on the surface of the user. In other words, the processor 15 receives a detected vibration signal from the sensor unit 14, and processes the detected vibration signal in order to determine a force exerted by the cleaning element 11 according to, for example, a force determination algorithm. The force determination algorithm may calculate an exerted force by inputting the detected vibration values, or may compare the detected vibration values to known vibration values-exerted force value pairs.

The processor 15 may be provided within the device 1, or external to the device 1. When external to the device 1 (i.e. in a smartphone) there may also be a communication unit (not shown) capable of transmitting the detected vibration to the processor 15.

Additionally, the processor 15 may be configured to determine the force exerted by the cleaning elements 11 based on at least one of the measured amplitude and the measured frequency. Changes to both the amplitude and the frequency correlate to changes in a force applied by the cleaning elements 11.

Yet further, the processor 15 may be configured to analyse the measured amplitude and the measured frequency in order to determine a frequency spectrum of the detected vibration. In this case, the exerted force may be determined based on the frequency spectrum. Indeed, there may exist different frequency spectrums for different magnitudes of forces applied by the cleaning elements 11. Thus, the detected frequency spectrum may be compared to known frequency spectrum-applied force pairs in order to determine a force applied by the cleaning elements 11.

Additionally, it may be beneficial for the processor 15 to take into account a driving vibration by the vibratory means 13 when determining an applied force. Specifically, the processor 15 may be configured to obtain a driving vibration signal of the vibratory means 13. This may be a known vibration value (i.e. a known, predetermined frequency and amplitude of vibration), or it may be obtained from a sensor.

In this case, the driving vibration signal (corresponding to the vibration of the vibratory means 13) as well as the detected vibration may be analyzed in order to determine the exerted force. As such, the noise caused by the vibration of the vibratory means may be cancelled out, or otherwise taken into account in the analysis.

In some exemplary embodiments, the processor 15 may be configured to process, with a force determination machine learning algorithm, the detected vibration in order to determine the exerted force. The force determination machine learning algorithm may be any artificial intelligence algorithm configured to receive a detected vibration, and output a predicted force/pressure applied.

As such, the force determination machine learning algorithm may be trained using a training algorithm configured to receive an array of training inputs and known outputs, wherein the training inputs comprise a plurality of vibrations of cleaning elements 11 of the device 1 as the cleaning element 11 engages with a surface, and the known outputs comprise a plurality of forces exerted by the cleaning elements 11 of the device 1 on the surface.

Accordingly, a more accurate force/pressure prediction may be achieved. Indeed, the force determination machine learning algorithm may be adjusted to an individual user based on user characteristics. Further, the algorithm may be adjusted based on the type of personal care device, cleaning element type, driving vibration signal, etc.

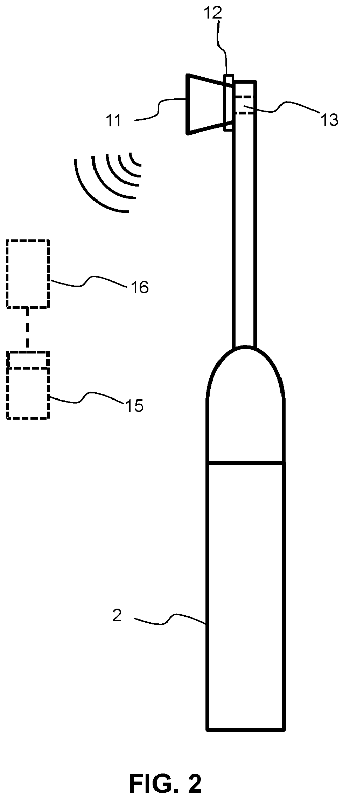

Turning now to Figure 2, there is presented a simplified schematic block diagram of an electric toothbrush 2 according to an alternative embodiment. The cleaning elements 11, vibratory means 13 and processor 15 are similar to those of Figure 1, and therefore further description is omitted here for the sake of brevity.

The electric toothbrush of Figure 2 differs in that the sensor unit 16 comprises an acoustic sensor configured to measure an amplitude and a frequency of vibration of the cleaning elements. The acoustic sensor 16 (i.e. microphone) may be provided externally to the personal care device/toothbrush 2. For example, the acoustic sensor 16 may be provided in the form of a microphone of a smartphone device. Indeed, the vibration of the cleaning elements 11 may be detected by the acoustic elements by sound waves, rather than the vibration of the device 2 itself in the case of an accelerometer provided in a handle of the device 2.

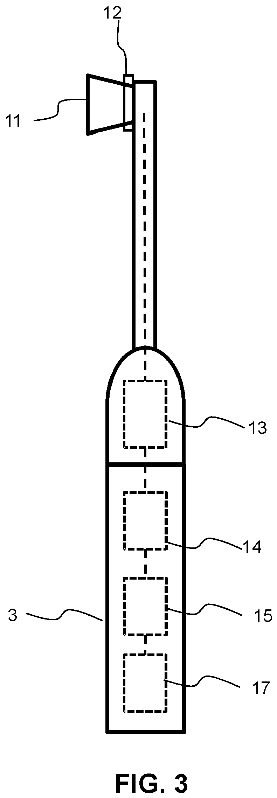

Figure 3 presents a simplified schematic block diagram including a further embodiment of an electric toothbrush 3. The cleaning elements 11, vibratory means 13, and sensor unit 14, 16 may be similar to those of Figures 1 and 2, and therefore further description is omitted here for the sake of brevity.

In addition to the above described components, the electric toothbrush 3 further comprises a feedback component 17. The feedback component 17 comprises sensory output means configured to provide information regarding the force exerted by the cleaning elements 11 to the user. In this case, the processor 15 is further configured to control the feedback component 17 to provide an indicator of the determined force.

By way of example, when the determined force is undesirably low (indicating inadequate cleaning) the feedback component 17 may be controlled to covey this to the user (i.e. a first light, noise, haptic sensation). When the determined force is undesirably high (indicating damaging cleaning) the feedback component 17 may be controlled to covey this to the user (i.e. a second light, noise, haptic sensation).

Accordingly, the user may be trained to have more desirable cleaning behavior/habits.

Although the embodiments of Figures 1-3 have been described above with reference to vibratory motion of the bristles of the toothbrush, the proposed concept(s) may be employed in other vibratory personal care devices exhibiting vibration of cleaning elements.

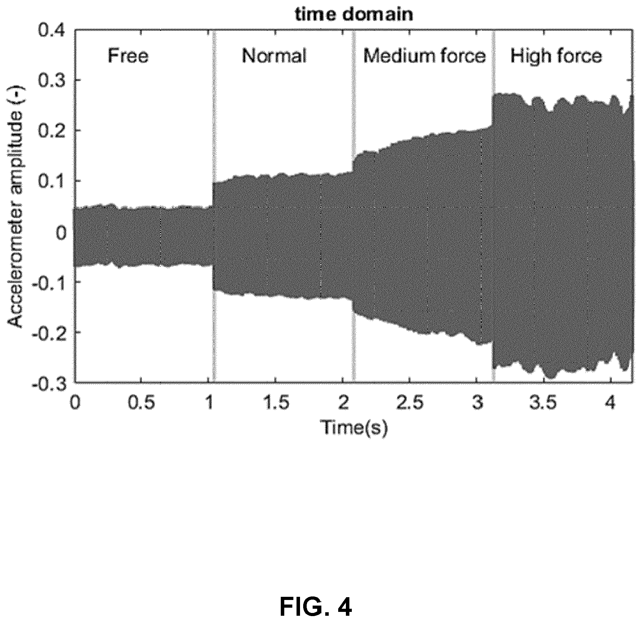

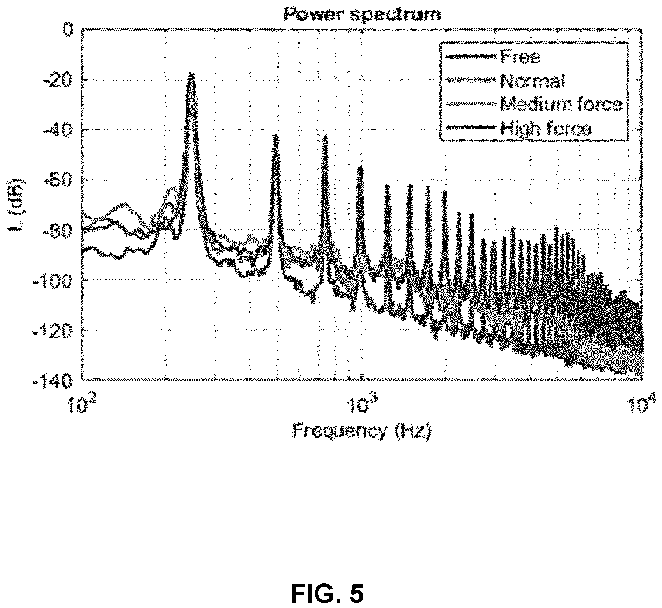

Moving onto Figures 4 and 5, there are presented graphs showing a relationship between an amplitude of vibration and force applied. Figure 4 presents an accelerometer amplitude and force applied by cleaning elements of a personal care device, while Figure 5 presents an accelerometer amplitude with frequency at different forces applied by the cleaning elements.

More particularly, in Figure 4, the accelerometer amplitude was measured for four different levels of force: no-load/free in the air, normal brushing, a medium force and finally a high force. It is clearly observed that the amplitude increases when the pressure during brushing is increased.

In Figure 5, the power spectrum of the accelerometer signal is plotted for the four different levels of force. It should be noted that the graphed lines are normalized at 492 Hz. Differences in power and noise floor as function of frequency are very clearly visible and can be used to give a useful indication with respect to the pressure/force applied.

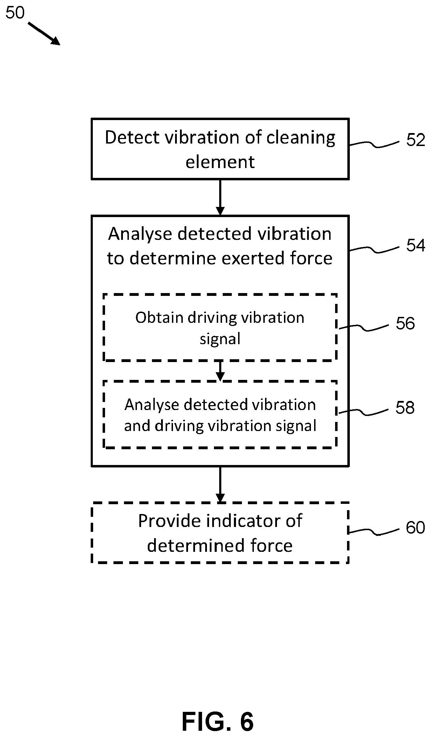

Figure 6 is a simplified flow diagram of a method for detecting a force exerted by a vibratory personal care device according to an exemplary embodiment. More specifically, the vibratory personal care device comprises a plurality of cleaning elements for engagement with a surface of a user and a vibratory means adapted to vibrate the cleaning elements.

In step 52, a vibration of the cleaning element of the device is detected as the cleaning element engages with the surface of the user. For example, the vibration may be detected as a user brushes or pushes the cleaning element into a surface of the user.

In step 54, the detected vibration is analyzed in order to determine a force exerted by the cleaning elements on the surface of the user.

Optionally, in some embodiments, step 54 of the method further comprises sub-steps 56 and 58. In step 56, the driving vibration signal (of the vibratory means) is obtained. This may be a known value, or may be a detected value from the vibratory means. In step 58, the driving vibration signal is further analyzed alongside the detected vibration in order to determine the exerted force.

Furthermore, in some embodiments the method may further include optional step 60. In step 60, an indicator of the determined force is provided. This may be provided by a sensory means intended for the user.

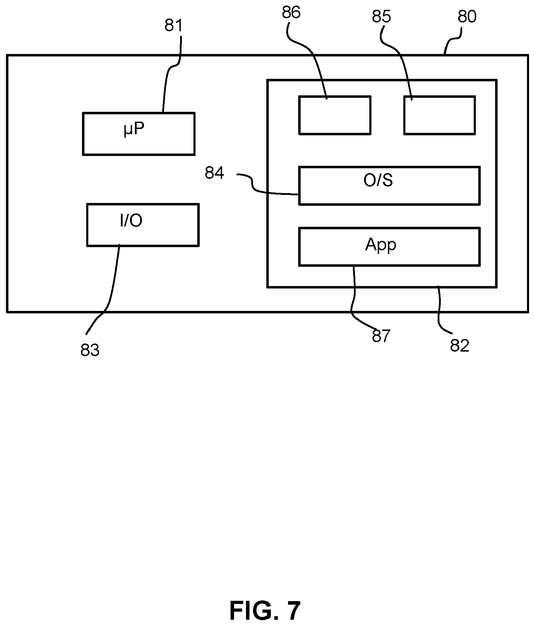

Figure 7 illustrates an example of a computer 80 within which one or more parts of an embodiment may be employed. Various operations discussed above may utilize the capabilities of the computer 80. For example, one or more parts of a system for controlling a personal care device may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 80 includes, but is not limited to, PCs, workstations, laptops, PDAs, palm devices, servers, storages, and the like. Generally, in terms of hardware architecture, the computer 80 may include one or more processors 81, memory 82, and one or more I/O devices 83 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 81 is a hardware device for executing software that can be stored in the memory 82. The processor 81 can be virtually any custom made or commercially available processor, a central processing unit (CPU), a digital signal processor (DSP), or an auxiliary processor among several processors associated with the computer 80, and the processor 81 may be a semiconductor based microprocessor (in the form of a microchip) or a microprocessor.

The memory 82 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 82 may incorporate electronic, magnetic, optical, and/or other types of storage media. Note that the memory 82 can have a distributed architecture, where various components are situated remote from one another, but can be accessed by the processor 81.

The software in the memory 82 may include one or more separate programs, each of which comprises an ordered listing of executable instructions for implementing logical functions. The software in the memory 82 includes a suitable operating system (O/S) 84, compiler 86, source code 85, and one or more applications 87 in accordance with exemplary embodiments. As illustrated, the application 87 comprises numerous functional components for implementing the features and operations of the exemplary embodiments. The application 87 of the computer 80 may represent various applications, computational units, logic, functional units, processes, operations, virtual entities, and/or modules in accordance with exemplary embodiments, but the application 87 is not meant to be a limitation.

The operating system 84 controls the execution of other computer programs, and provides scheduling, input-output control, file and data management, memory management, and communication control and related services. It is contemplated by the inventors that the application 87 for implementing exemplary embodiments may be applicable on all commercially available operating systems.

Application 87 may be a source program, executable program (object code), script, or any other entity comprising a set of instructions to be performed. When a source program, then the program is usually translated via a compiler (such as the compiler 86), assembler, interpreter, or the like, which may or may not be included within the memory 82, so as to operate properly in connection with the O/S 84. Furthermore, the application 87 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 83 may include input devices such as, for example but not limited to, a mouse, keyboard, scanner, microphone, camera, etc. Furthermore, the I/O devices 83 may also include output devices, for example but not limited to a printer, display, etc. Finally, the I/O devices 83 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 83 also include components for communicating over various networks, such as the Internet or intranet.

If the computer 80 is a PC, workstation, intelligent device or the like, the software in the memory 82 may further include a basic input output system (BIOS) (omitted for simplicity). The BIOS is a set of essential software routines that initialize and test hardware at startup, start the O/S 84, and support the transfer of data among the hardware devices. The BIOS is stored in some type of read-only-memory, such as ROM, PROM, EPROM, EEPROM or the like, so that the BIOS can be executed when the computer 80 is activated.

When the computer 80 is in operation, the processor 81 is configured to execute software stored within the memory 82, to communicate data to and from the memory 82, and to generally control operations of the computer 80 pursuant to the software. The application 87 and the O/S 84 are read, in whole or in part, by the processor 81, perhaps buffered within the processor 81, and then executed.

When the application 87 is implemented in software it should be noted that the application 87 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 87 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed control method(s), may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out a control method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 1, 2 and 3 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A vibratory personal care device (1) comprising:
a plurality of cleaning elements (11) for engagement with a surface of a user;
vibratory means (13) adapted to vibrate the cleaning elements;
a sensor unit (14) configured to detect a vibration of the cleaning elements as the cleaning element engages with the surface of the user; and
a processor (15) configured to analyse the detected vibration in order to determine a force exerted by the cleaning elements on the surface of the user.

2. The device of claim 1, wherein the sensor unit (14) comprises an accelerometer configured to measure an amplitude and a frequency of vibration of the cleaning elements (11), and optionally wherein the accelerometer is an inertial motion unit sensor.

3. The device of any of claim 2, wherein the sensor unit (14) is integrated with a handle of the device.

4. The device of claim 2 or 3, wherein the accelerometer is configured to measure the amplitude and frequency of vibration at a rate greater than 1 kHz.

5. The device of claim 1, wherein the sensor unit (16) comprises an acoustic sensor configured to measure an amplitude and a frequency of vibration of the cleaning elements (11).

6. The device of any of claims 2-5, wherein the processor (15) is configured to determine the force exerted by the cleaning elements (11) based on at least one of the measured amplitude and the measured frequency.

7. The device of claim 6, wherein the processor (15) is configured to:
analyse the measured amplitude and the measured frequency in order to determine a frequency spectrum of the detected vibration; and
determine the exerted force based on the frequency spectrum.

8. The device of any of claims 1-7, wherein the processor (15) is configured to
obtain a driving vibration signal of the vibratory means (13); and
analyse the detected vibration and the driving vibration signal in order to determine the exerted force.

9. The device of any of claims 1-8, wherein the processor (15) is configured to process, with a force determination machine learning algorithm, the detected vibration in order to determine the exerted force.

10. The device of claim 9, wherein the force determination machine learning algorithm is trained using a training algorithm configured to receive an array of training inputs and known outputs, wherein the training inputs comprise a plurality of vibrations of cleaning elements (11) of the device as the cleaning element engages with a surface, and the known outputs comprise a plurality of forces exerted by the cleaning elements of the device on the surface.

11. The device of any of claims 1-10, further comprising a feedback component (17) comprising sensory output means, and wherein the processor (15) is further configured to control the feedback component to provide an indicator of the determined force.

12. The device of any of claims 1-11, wherein the cleaning elements (11) comprise a plurality of bristles, and wherein the sensor unit (14) is configured to detect a vibration of at least some of the plurality of bristles as the at least some of the plurality of bristles engage with the surface of the user.

13. The device of any of claims 1-12, wherein the device (1) is a toothbrush.

14. A method (50) for detecting a force exerted by a vibratory personal care device comprising a plurality of cleaning elements for engagement with a surface of a user and a vibratory means adapted to vibrate the cleaning elements, the method comprising:
detecting (52) a vibration of the cleaning element of the device as the cleaning element engages with the surface of the user; and
analysing (54) the detected vibration in order to determine a force exerted by the cleaning elements on the surface of the user.

15. A computer program comprising computer program code means adapted, when said computer program is run on a computer, to implement the method of claim 14.
